(19) Europäisches Patentamt
European Patent Office
Office européen des brevets

(11) EP 1 557 437 A2

(12) **EUROPÄISCHE PATENTANMELDUNG**

(43) Veröffentlichungstag:
**27.07.2005 Patentblatt 2005/30**

(51) Int Cl.⁷: **C08G 18/28**, C08G 65/18, C09D 175/04

(21) Anmeldenummer: **05000543.8**

(22) Anmeldetag: **13.01.2005**

(84) Benannte Vertragsstaaten:
**AT BE BG CH CY CZ DE DK EE ES FI FR GB GR HU IE IS IT LI LT LU MC NL PL PT RO SE SI SK TR**
Benannte Erstreckungsstaaten:
**AL BA HR LV MK YU**

(30) Priorität: **23.01.2004 DE 102004003495**

(71) Anmelder: **Bayer MaterialScience AG**
**51368 Leverkusen (DE)**

(72) Erfinder:
- **Müller, Hanns-Peter, Dr.**
**51519 Odenthal (DE)**
- **Niesten, Meike, Dr.**
**51061 Köln (DE)**
- **Schmitz, Jörg, Dr.**
**51065 Köln (DE)**
- **Mundstock, Holger**
**42929 Wermelskirchen (DE)**

(54) **Orthoestergruppenhaltige Bindemittel**

(57) Diese Erfindung betrifft neue NCO- und polyorthoestergruppenhaltige Bindemittel, ein Verfahren zu deren Herstellung und ihre Verwendung.

EP 1 557 437 A2

## Beschreibung

Diese Erfindung betrifft neue NCO- und polyorthoestergruppenhaltige Bindemittel, ein Verfahren zu deren Herstellung und ihre Verwendung.

Polyorthoester entstehen durch die Umesterung acyclischer Orthoester mit polyfunktionellen Alkoholen. Da die Polyorthoesterbildung unter Säurekatalyse im wässrigen Medium reversibel ist, können (Poly)Orthoestergruppen als latente oder verkappte OH-Gruppen betrachtet werden. Durch Hydrolyse werden die OH-Gruppen so freigesetzt, dass der eingangs zur Verkappung eingesetzte acyclische Orthoester nicht ganz abgespalten wird und somit im Polymer enthalten bleibt. Dieses System stellt somit eine abspalterfreie latente OH-Verbindung dar.

Nach EP-B 882 106 sind Lacke basierend auf Vernetzern mit bicyclischen Orthoestergruppen als latenten OH-Gruppen beschrieben. Hydrolyse und Vernetzung dieser bicyclischen Orthoestergruppen erfolgen nach gleichen Prinzip wie im Falle der Polyorthoester. Derartige Lacke ergeben schnelltrocknende Filme mit ausgezeichneter Chemikalienbeständigkeit.

In DE-A 31 03 779 und DE-A 31 28 217 werden stöchiometrische Addukte von OH-gruppenhaltigen bicyclischen Orthoestern mit Polyisocyanaten beschrieben, wobei Polyurethane mit bicyclischen Orthoestergruppen als reaktiven Funktionen erhalten werden. Diese können über eine kationische Ringöffnungshomopolymerisation unter Ausschluss von Luftfeuchtigkeit dann miteinander vernetzt werden.

Aus WO 99/10397 A1 sind Verbindungen bekannt, die neben bicyclischen Orthoestergruppen auch freie NCO-Gruppen aufweisen, so dass diese nach Deblockierung der latenten OH-Gruppen selbstvernetzend ausgehärtet werden können.

Ihrer sehr schnellen Trocknungsgeschwindigkeit bei Vernetzung mit Isocyanaten steht bicyclischen Orthoestergruppen als latenten OH-Gruppen jedoch der Nachteil entgegen, dass ihre Herstellung und der Einbau in höhermolekulare Verbindungen, die sich dann zur Herstellung von Lacken und Kunststoffen eignen, über mehrstufige Synthesen verlaufen.

DE-A 26 25 392 und EP-A 1 225 172 beschreiben die Blockierung von Polyolen mit acyclischen Orthoestern und die Verwendung dieser verkappten Polyole in Kombination mit Polyisocyanaten zur Herstellung von Polyurethanen. Die Deblockierung der OH-Gruppen erfolgt dabei nach Applikation durch den Einfluss von Luftfeuchtigkeit. Verglichen mit herkömmlichen 2K-PUR-Systemen auf Basis von Polyacrylaten und aliphatischen Polyisocyanaten ergibt sich jedoch kein Geschwindigkeitsvorteil bei der Vernetzung.

Für Autoreparaturlacke sind schnell trocknende Lacke insbesondere solche auf Basis linearaliphatischer Isocyanate gefragt. Grund sind ihre guten Lackeigenschaften wie zum Beispiel gute mechanische und chemische Beständigkeit, gute Lackoptik und effiziente Verarbeitbarkeit (wenig Spritzgänge, schnelle Trocknung). Für die Erhöhung der Produktivität ist vor allem eine noch schnellere Trocknung gefragt als bislang mit 2K-PUR Lacken erreicht werden konnte. Ferner sind aus Gründen der Applikationssicherheit möglichst lange Topfzeiten gefragt.

Es wurde nun gefunden, dass speziell aufgebaute Polyorthoester in Kombination mit Polyisocyanaten zu Addukten mit verkappten OH- und gegebenenfalls freien NCO-Gruppen führen, welche sich als Bindemittel in schnelltrocknenden Polyurethanbeschichtungssystemen einsetzen lassen.

Gegenstand der Erfindung ist daher ein Verfahren zur Herstellung von polyorthoester- und gegebenenfalls NCO-gruppenhaltigen Polymeren, bei dem

A) ein Polyorthoester, welcher mindestens eine isocyanatreaktive Gruppe aufweist, durch Umsetzung von

A1) einem oder mehreren acyclischen Orthoestern mit

A2) niedermolekularen Polyolen mit einer Funktionalität von 4 - 8 und einem zahlenmittleren Molekulargewicht von 80 - 500 g/mol und

A3) gegebenenfalls einem 1,3 Diol und/oder einem Triol, wobei die Hydroxylgruppen durch mindestens 3 Kohlenstoffatome voneinander getrennt sind,
gegebenenfalls in Anwesenheit von

A4) Katalysatoren

hergestellt wird und

B) dieser Polyorthoester anschließend mit mindestens einem Polyisocyanat_umgesetzt wird.

In Komponente A1) können beispielsweise Orthoameisensäuretriethylester, Orthoameisensäuretriisopropylester, Orthoameisensäuretripropylester, Orthobuttersäuretrimethylester, Orthoessigsäuretriethylester, Orthoessigsäuretrimethylester, Orthopropionsäuretriethylester, Orthovaleriansäuretrimethylester eingesetzt werden. Bevorzugt ist die Verwendung von Orthoameisensäuretriethylester, Orthoessigsäuretriethylester, Orthoessigsäuretrimethylester und/oder Orthopropionsäuretriethylester, besonders bevorzugt sind Orthoessigsäuretriethylester und Orthopropionsäuretriethylester.

Die vorstehend genannten Verbindungen können in Komponente A1) einzeln oder in beliebigen Mischungen untereinander eingesetzt werden.

Beispielhaft seien als Verbindungen der Komponente A2) Pentaerythrit, Di-Trimethylolpropan, Erythritol, Diglycerid, Bis(trimethylolpropan), Di-Pentaerythritol, Mannit oder Methylglykosid genannt. Bevorzugt wird in A2) Pentaerythrit eingesetzt.

Beispiele für 1,3-Diole der Komponente A3) sind Neopentylglykol, 2-Methyl-1,3-propandiol, 2-Methyl-2,4-pentandiol, 3-Methyl-1,3-Butandiol, 2-Ethyl-1,3-hexandiol, 2,2-Diethyl-1,3-propandiol, 2,2,4-Trimethyl-1,3-pentandiol, 2-Butyl-2-ethyl-1,3-propandiol, 2-Phenoxypropan-1,3-diol, 2-Methyl-2-phenylpropan-1,3-diol, 1,3-Propylenglykol, 1,3-Butylenglykol, Dimethylolpropionsäure, Dimethylolbutansäure, 2-Ethyl-1,3-oktandiol und 1,3-Dihydroxycyclohexan; Fettsäuremonoglycerid (β-Produkte) wie zum Beispiel Glycerin-monoacetat (β-Produkt) und Glycerinmonostearat (β-Produkt). Bevorzugt sind Neopentylglykol, 2-Methyl-1,3-propandiol, 2-Methyl-2,4-pentandiol, 3-Methyl-1,3-butandiol, 2-Ethyl-1,3-Hexandiol, 2,2-Diethyl-1,3-propandiol, 2,2,4-Trimethyl-1,3-pentandiol und 2-Butyl-2-ethyl-1,3-propandiol.

Beispiele für Triole der Komponente A3) sind 1,2,3-Propantriol, 1,2,4-Butantriol, 1,1,1-Trimethylolethan, 1,2,6-Hexantriol, 1,1,1-Trimethylolpropan und Polyester-basierende Triole mit einem zahlenmittleren Molekulargewicht von 100 bis 1000 g/mol. Letztere können beispielsweise aus den vorstehend genannten Triolen durch Reaktion mit Lactonen, wie ε-Caprolacton, β-Propiolacton, γ-Butyrolacton, γ- und δ-Valerolacton, 3,5,5- und 3,3,5-Trimethylcaprolacton oder beliebigen Gemischen solcher Lactone, hergestellt werden. Bevorzugtes Triol der Komponente A3) ist Trimethylolpropan.

Das Äquivalentverhältnis von umzuestemden Gruppen der Verbindungen der Komponente A1) zu den OH-Gruppen der Verbindungen der Komponenten A2) und A3) beträgt bevorzugt 1 : 1,3 bis 1 : 1,5.

Als Katalysatoren für die Umesterungsreaktion in Schritt A) können die dem Fachmann an sich bekannten Veresterungskatalysatoren, wie z.B. Säuren, Basen oder Übergangsmetallverbindungen, verwendet werden. Bevorzugt sind Lewis- oder Broenstedt-Säuren, besonders bevorzugt ist p-Toluolsulfonsäure.

Diese werden im erfindungsgemäßen Verfahren in Mengen von 0,001 bis 5 Gew.-%, bevorzugt 0,01 bis 1 Gew.-% bezogen auf die Summe der Mengen der Komponenten A1) - A3) verwendet.

Die Reaktionstemperatur der Umesterung in Schritt A) beträgt 50 - 200°C, bevorzugt 75 bis 150°C. In einer bevorzugten Ausführungsform der Erfindung wird der bei der Umesterung abgespaltene Alkolhol destillativ aus der Reaktionsmischung gegebenenfalls unter Anwendung von Vakuum entfernt. Auf diese Weise lässt sich neben der Gleichgewichtsverschiebung auch das Ende der Umesterungsreaktion leicht erkennen, da diese beendet ist, sobald kein Spaltprodukt (Alkohol) mehr überdestilliert.

Als Polyisocyanate können in Schritt B) des erfindungsgemäßen Verfahrens alle organischen Polyisocyanate bevorzugt mit einer mittleren NCO-Funktionalität von mindestens 2 und einem Molekulargewicht von mindestens 140 g/mol eingesetzt werden. Gut geeignet sind vor allem (i) unmodifizierte organische Polyisocyanate des Molekulargewichtsbereichs 140 bis 300 g/mol, (ii) Lackpolyisocyanate eines Molekulargewichts im Bereich von 300 bis 1000 g/mol sowie (iii) Urethangruppen-aufweisende NCO-Prepolymere eines über 1000 g/mol liegenden Molekulargewichtes oder Gemische aus (i) bis (iii).

Beispiele für Polyisocyanate der Gruppe (i) sind 1,4-Diisocyanatobutan, 1,6-Diisocyanatohexan (HDI), 1,5-Diisocyanato-2,2-dimethylpentan, 2,2,4- bzw. 2,4,4-Trimethyl-1,6-diisocyanatohexan, 1-Isocyanato-3,3,5-trimethyl-5-isocyanatomethyl-cyclohexan (IPDI), 1-Isocyanato-1-methyl-4-(3)-isocyanatomethyl-cyclohexan, Bis-(4-isocyanatocyclohexyl)methan, 1,10-Diisocyanatodecan, 1,12-Diisocyanato-dodecan, Cyclohexan-1,3- und -1,4-diisocyanat, Xylylendiisocyanat-Isomere, Triisocyanatononan (TIN), 2,4-Diisocyanatotoluol oder dessen Gemische mit 2,6-Diisocyanatotoluol mit bevorzugt, bezogen auf Gemische, bis zu 35 Gew.-% 2,6-Diisocyanatotoluol, 2,2'-, 2,4'-, 4,4'-Diisocyanatodiphenylmethan oder technische Polyisocyanatgemische der Diphenylmethanreihe oder beliebige Gemische der genannten Isocyanate. Bevorzugt kommen dabei die Polyisocyanate der Diphenylmethanreihe, besonders bevorzugt als Isomerengemische, zum Einsatz.

Polyisocyanate der Gruppe (ii) sind die an sich bekannten Lackpolyisocyanate. Unter dem Begriff "Lackpolyisocyanate" sind im Rahmen der Erfindung Verbindungen oder Gemische von Verbindungen zu verstehen, die durch an sich bekannte Oligomerisierungsreaktion von einfachen Diisocyanaten der unter (i) beispielhaft genannten Art erhalten werden. Geeignete Oligomerisierungsreaktionen sind z.B. die Carbodiimidisierung, Dimerisierung, Trimersisierung, Biuretisierung, Harnstoffbildung, Urethanisierung, Allophanatisierung und/oder Cyclisierung unter Ausbildung von Oxadiazinstrukturen. Oftmals laufen bei der "Oligomerisierung" mehrere der genannten Reaktionen gleichzeitig oder nacheinander ab.

Bevorzugt handelt es sich bei den "Lackpolyisocyanaten" (ii) um Biuretpolyisocyanate, Isocyanuratgruppen-aufweisende Polyisocyanate, Isocyanurat- und Uretdiongruppen-aufweisende Polyisocyanatgemische, Urethan- und/oder Allophanatgruppen-aufweisende Polyisocyanate oder um Isocyanurat- und Allophanatgruppen-aufweisende Polyisocyanatgemische auf Basis einfacher Diisocyanate.

Die Herstellung von derartigen Lackpolyisocyanaten ist bekannt und beispielweise in der DE-A 1 595 273, DE-A 3 700 209 und DE-A 3 900 053 oder in der EP-A-0 330 966, EP-A 0 259 233, EP-A- 0 377 177, EP-A-0 496 208, EP-A-0 524 501 oder US-A 4 385 171 beschrieben.

Polyisocyanate der Gruppe (iii) sind die an sich bekannten Isocyanatgruppen aufweisenden Prepolymere auf Basis von einfachen Diisocyanaten der oben beispielhaft genannten Art und/oder auf Basis von Lackpolyisocyanaten (ii) einerseits und organischen Polyhydroxyverbindungen eines über 300 g/mol liegenden Molekulargewichts andererseits. Während es sich bei den Urethangruppen-aufweisenden Lackpolyisocyanaten der Gruppe (ii) um Derivate von niedermolekularen Polyolen des Molekulargewichtsbereichs 62 bis 300 g/mol handelt, geeignete Polyole sind beispielsweise Ethylenglykol, Propylenglykol, Trimethylolpropan, Glycerin oder Gemische dieser Alkohole, werden zur Herstellung der NCO-Prepolymeren der Gruppe (iii) Polyhydroxylverbindungen eines über 300 g/mol, bevorzugt über 500 g/mol, besonders bevorzugt eines zwischen 500 und 8 000 g/mol liegenden Molekulargewichts eingesetzt. Derartige Polyhydroxylverbindungen sind insbesondere solche, die pro Molekül 2 bis 6, bevorzugt 2 bis 3 Hydroxylgruppen aufweisen und aus der Gruppe, bestehend aus Ether-, Ester-, Thioether-, Carbonat- und Polyacrylatpoloyolen und Gemischen aus derartigen Polyolen ausgewählt sind.

Bei der Herstellung der NCO-Prepolymeren (iii) können die genannten höhermolekularen Polyole auch in Abmischungen mit den genannten niedermolekularen Polyolen zur Anwendung gelangen, so dass unmittelbar Gemische aus niedermolekularen, Urethangruppen aufweisenden Lackpolyisocyanaten (ii) und höhermolekularen NCO-Prepolymeren (iii) resultieren, die ebenfalls als erfindungsgemäße Ausgangskomponente (C) geeignet sind.

Zur Herstellung der NCO-Prepolymeren (iii) oder deren Gemische mit den Lackpolyisocyanaten (ii) werden Diisocyanate (i) der oben beispielhaft genannten Art oder Lackpolyisocynatate der unter (ii) beispielhaft genannten Art mit den höhermolekularen Hydroxylverbindungen oder deren Gemischen mit niedermolekularen Polyhydroxylverbindungen der beispielhaft genannten Art unter Einhaltung eines NCO/OH Äquivalentverhältnisses von 1,1:1 bis 40:1, bevorzugt 2:1 bis 25:1 unter Urethanbildung umgesetzt. Gegebenenfalls kann bei Verwendung eines Überschusses an destillierbarem Ausgangsdiisocyanat dieser im Anschluss an die Umsetzung destillativ entfernt werden, so dass monomerenfreie NCO-Prepolymere, d.h. Gemische aus Ausgangsdiisocyanaten (i) und echten NCO-Prepolymeren (iii) vorliegen, die ebenfalls als Komponente (A) eingesetzt werden können.

Bei der Herstellung der NCO-Prepolymeren (iii) können die genannten höhermolekularen Polyole auch in Abmischungen mit den genannten niedermolekularen Polyolen zur Anwendung gelangen, so dass unmittelbar Gemische aus niedermolekularen, Urethangruppen aufweisenden Lackpolyisocyanaten (ii) und höhermolekularen NCO-Prepolymeren (iii) resultieren.

Das Äquivalentverhältnis von NCO-reaktiven Gruppen des Polyorthoesters aus Schritt A) und NCO-Gruppen des Polyisocyanats in B) beträgt üblicherweise 1 : 1 - 1 : 40, bevorzugt 1 : 1 - 1 : 10, besonders bevorzugt 1 : 1 - 1 : 3,2.

Die Umsetzung der isocyanatreaktiven Polyorthoester mit den Polyisocyanaten erfolgt bevorzugt bei Temperaturen von 60 - 150°C, bevorzugt 80 - 130°C.

Falls erforderlich können in Schritt B) die dem Fachmann an sich aus der Polyurethanchemie bekannten Katalysatoren zur Beschleunigung der NCO/OH-Reaktion eingesetzt werden. Derartige Katalysatoren sind beispielsweise Organometallverbindungen, Amine (z.B. tertiäre Amine) oder Metallverbindungen wie Bleioctoat, Quecksilbersuccinat, Zinnoctoat oder Dibutylzinndilaurat.

Falls diese mitverwendet werden, werden sie vorzugsweise in Mengen von 0,001 bis 5 Gew.-%, insbesondere 0,002 bis 2 Gew.-% Katalysator bezogen auf die Gesamtmenge von Polyorthoester und Polyisocyanat eingesetzt.

Sowohl die Umesterung (Schritt A)) als auch die Reaktion von isocyanatreaktivem Polyorthoester mit dem Polyisocyanat (Schritt B)) kann in Gegenwart von Lösemitteln und/oder Hilfs- und Zusatzstoffen erfolgen.

Als Lösemittel sind beispielsweise geeignet Ester, wie z.B. Ethylacetat, Butylacetat, Methoxypropylacetat, Methylglykolacetat, Ethylglykolacetat, Diethylenglykolmonomethyletheracetat; Ketone, wie z.B. Methylethylketon, Methylisobutylketon, Methylamylketon; Aromaten, wie z.B. Toluol und Xylol sowie die in der Lackchemie üblichen höhersiedenden Kohlenwasserstoffgemische.

Ggf. enthaltene Hilfsmittel oder Zusatzstoffe können z. B. oberflächenaktive Substanzen, interne Trennmittel, Füllstoffe, Farbstoffe, Pigmente, Flammschutzmittel, Hydrolyseschutzmittel, Mikrobizide, Verlaufshilfsmittel, Antioxidantien wie 2,6-Di-tert-butyl-4-methylphenol, UV-Absorber vom Typ 2-Hydroxyphenyl-benzotriazol oder Lichtschutzmittel vom Typ der am Stickstoffatom substituierten oder unsubstituierten HALS-Verbindungen wie Tinuvin® 292 und Tinuvin® 770 DF (Ciba Spezialitäten GmbH, Lampertheim, DE) oder andere handelsübliche Stabilisierungsmittel, wie sie beispielsweise in "Lichtschutzmittel für Lacke" (A. Valet, Vincentz Verlag, Hannover, 1996 und "Stabilization of Polymeric Materials" (H. Zweifel, Springer Verlag, Berlin, 1997, Appendix 3, S. 181-213) beschrieben sind, oder beliebige Gemische dieser Verbindungen.

Falls gewünscht können Viskositätseinstellungen durch die Zugabe von dem Fachmann aus der Lacktechnologie bekannten Lacklösemitteln erfolgen. In diesem Zusammenhang sind beispielhaft zu nennen: Ethylacetat, Butylacetat, Methoxypropylacetat, Methylglykolacetat, Ethylglykolacetat, Diethylenglykolmonomethyletheracetat; Ketone, wie z.B. Methylethylketon, Methylisobutylketon, Methylamylketon; Aromaten, wie z.B. Toluol und Xylol sowie die in der Lackchemie üblichen höhersiedenden Kohlenwasserstoffgemische.

Die nach dem erfindungsgemäßen Verfahren erhältlichen polyorthoester- und gegebenenfalls NCO-gruppenhaltigen Polymere haben ein zahlenmittleres Molekulargewicht $M_n$ von bevorzugt 500 bis 3 000 g/mol, besonders bevorzugt 500 bis 2 200 g/mol.

Eventuell nach Umsetzung von Polyorthoester mit Polyisocyanat noch enthaltene Restmonomere an Di- und/oder Triisocyanaten können falls gewünscht z.B. durch Destillation entfernt werden, so dass die nach dem erfindungsgemäßen Verfahren erhältlichen Polymere Restmonomergehalte and Di- und/oder Triisocyanaten von bevorzugt < 0,5 Gew.% enthalten.

Ein weiterer Gegenstand der Erfindung sind Polyorthoester- und gegebenenfalls NCO-gruppenhaltige Polymere erhältlich nach dem erfindungsgemäßen Verfahren.

Die erfindungsgemäßen funktionellen Polymere stellen vielseitige Ausgangsmaterialien für die Herstellung von niedrigviskosen, lösemittelarmen und abspalterfreien Polyurethansystemen dar, wobei diese als Ein- oder Mehrkomponentensysteme formuliert werden können.

Daher sind ein weiterer Gegenstand der Erfindung Beschichtungsmittel enthaltend

a) einen oder mehrere polyorthoester- und gegebenenfalls NCO-gruppenhaltige Polymere gemäß Erfindung,

b) gegebenenfalls Polyisocyanate

c) Katalysatoren

d) gegebenenfalls Hilf- und Zusatzstoffe.

Als Polyisocyanate der Komponente b) kommen alle bereits vorstehend unter Schritt B) genannten Verbindungen einzeln oder in beliebigen Mischungen untereinander in Betracht.

Als Katalysatoren in c) können einzelne Katalysatortypen oder aber auch Mischungen mehrerer unterschiedlich reagierender Katalysatoren verwendet werden.

Für die Katalyse der Deblockierungsreaktion zur Freisetzung der verkappten OH-Gruppen werden typischerweise Säureverbindungen eingesetzt.

Dies können zum Beispiel sein: anorganische Säuren wie Chlorwasserstoff, Schwefelsäure, Salpetersäure; Sulfonsäuren wie Methansulfonsäure, Ethansulfonsäure, Paratoluolsulfonsäure, Dodecylbenzolsulfonsäure, Dinonylnaphtalenesulfonsäure und Dinonylnaphthalendisulphonsäure; Carbonsäuren wie Ameisensäure, Essigsäure, Propionsäure, Butansäure, 2-Ethylhexansäure und Octansäure; organische phosphorsäurebasierte Verbindungen wie Monobutylphosphat, Dibutylphosphat, Monoisopropylphosphate, Diisopropylphosphate, Monooctylphosphate, Dioctylphosphate, Monodecylphosphate, Didecylphosphate, Metaphosphorsäure, Orthophosphorsäure, Pyrophosphorsäure, Trimethylphosphate, Triethylphosphat, Tributylphosphate, Trioctyphosphat, Tributoxyethylphosphate, tris-chloroethylphosphat, Triphenyphosphat und Tricresylphosphat sowie Lewissäuren.

Des weiteren können auch Neutralisationsprodukte der vorstehend genannten Säuren mit Aminen in Komponente c) als Säurekatalysatoren eingesetzt werden.

Ebenfalls möglich ist die Verwendung von Sulfonsäureestern der vorstehend genannten Sulfonsäuren mit primären, sekundären oder tertiären Alkoholen wie n-Propanol, n-Butanol, n-Hexanol, n-Octanol, Isopropanol, 2-Butanol, 2-Hexanol, 2-Octanol, Cyclohexanol, tert-Butanol sowie die Umsetzungprodukte der genannten Sulfonsäuren mit oxirangruppenhaltigen Verbindungen wie Glycidylacetat oder Butylglycidylether, wobei β-Hydroxyalkylsulfonsäureester erhalten werden.

Als Säurekatalysatoren werden in Komponente c) bevorzugt die vorstehend genannten sulfonsäure- und phosphorsäurebasierenden Verbindungen eingesetzt.

Ganz besonders bevorzugt ist die Verwendung von Dodecylbenzolsulfonsäure.

Neben den Säurekatalysatoren können in c) auch Katalysatoren zur Beschleunigung der NCO/OH-Reaktion von freigesetzten latenten OH-Gruppen mit NCO-Gruppen verwendet werden. Diese sind dem Fachmann aus der Polyurethanchemie an sich bekannt. Dies können zum Beispiel sein: tertiäre Amine wie Triethylamin, Pyridin, Methylpyridin, Benzyldimethylamin, N,N-Endoethylenpiperazin, N-Methylpiperidin, Pentamethyldiethylentriamin, N,N-Dimethylaminocyclohexan, N,N'-Dimethylpiperazin oder Metallsalze wie Eisen(III)-chlorid, Zinkchlorid, Zink-2-ethylcaproat, Zinn(II)-octoat, Zinn(I))-ethylcaproat, Zinn(II)-palmitat, Dibutylzinn(IV)-dilaurat und Molybdänglykolat oder beliebige Gemische solcher Katalysatoren.

Bevorzugt wird in c) eine Kombination von Säure- und NCO/OH-beschleunigenden Katalysatoren verwendet.
Die Menge der Komponente c) bezogen auf die Menge der Verbindungen der Komponenten a) und b) beträgt typischerweise 0,001 bis 5 Gew.-%, bevorzugt 0,01 bis 1 Gew.-%.
Ggf. in Komponente d) enthaltene Hilfs- und Zusatzstoffe können z.B. oberflächenaktive Substanzen, interne Trennmittel, Füllstoffe, Farbstoffe, Pigmente, Flammschutzmittel, Hydrolyseschutzmittel, Mikrobizide, Verlaufshilfsmittel, Antioxidantien wie 2,6-Di-tert-butyl-4-methylphenol, UV-Absorber vom Typ 2-Hydroxyphenyl-benzotriazol oder Lichtschutzmittel vom Typ der am Stickstoffatom substituierten oder unsubstituierten HALS-Verbindungen wie Tinuvin® 292 und Tinuvin® 770 DF (Ciba Spezialitäten GmbH, Lampertheim, DE) oder andere handelsübliche Stabilisierungsmittel, wie sie beispielsweise in "Lichtschutzmittel für Lacke" (A. Valet, Vincentz Verlag, Hannover, 1996 und "Stabilization of Polymeric Materials" (H. Zweifel, Springer Verlag, Berlin, 1997, Appendix 3, S. 181-213) beschrieben sind, oder beliebige Gemische dieser Verbindungen.
Bei der Herstellung der erfindungsgemäßen Beschichtungsmittel werden die Komponenten a) und b) miteinander in solchen Mengenverhältnissen vermischt, dass bevorzugt ein Äquivalentverhältnis von NCO-Gruppen zu latenten OH-Gruppen von 0,5:1 bis 2,0:1, besonders bevorzugt 0,8:1 bis 1,5:1, ganz besonders bevorzugt 1 : 1 resultiert.
Während oder nach der Vermischung der Einzelkomponenten a) und b) wird die Katalysatorkomponente c) und gegebenenfalls die üblichen Hilfs- und Zusatzstoffe zugemischt.
Beschichtungsmittel basierend auf den erfindungsgemäßen polyorthoester- und gegebenenfalls NCO-gruppenhaltigen Polymeren eignen sich zur Beschichtung einer Vielzahl von Materialien und Substraten, wie zum Beispiel Metall, Glas, Holz, Kunststoffe oder Beton.
Die erfindungsgemäßen Beschichtungsmittel können nach an sich bekannten Methoden wie beispielsweise durch spritzen, streichen, Fluten oder mit Hilfe von Walzen oder Rakeln auf beliebige Substrate aufgetragen werden.
Als Substrate eignen sich beispielsweise Metall, Holz, Glas, Stein, keramische Materialien, Beton, harte und flexible Kunststoffe, Textilien, Leder oder Papier.
Die Aushärtung nach Applikation kann bei Raumtemperatur oder bei erhöhten Temperatur ausgeführt werden.

**Beispiele :**

Alle Mengenangaben sind, soweit nicht anders vermerkt, als Gewicht (Gramm) zu verstehen. Alle Prozentangaben sind sofern nicht abweichend vermerkt als Gewichtsprozent zu verstehen.
Die Ermittlung des NCO-Gehaltes der in den Beispielen und Vergleichsbeispielen beschriebenen Harze erfolgte durch Titration gemäß DIN 53 185.
Die Hydrolyse der blockierten OH-Gruppen verläuft nach folgender Gleichung:

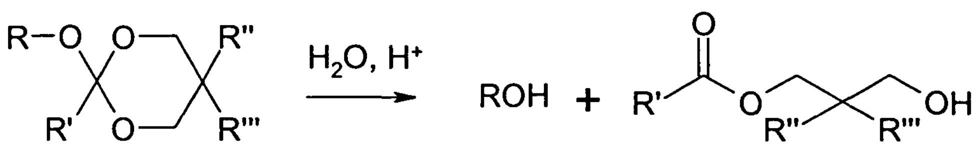


1 Mol mit acyclischen Orthoestern blockierte OH-Gruppen liefern nach Hydrolyse also 2 freie OH-Gruppen.
Damit lässt sich der Gehalt an latenten OH-Gruppen nach folgender Gleichung theoretisch berechnen:

$$OH\text{ - }Gehalt = \frac{2\cdot 17\cdot 100\cdot \frac{Einwage\ A1}{Molmasse\ A1}}{Einwage\ A1 + Einwage\ A2 + Einwage\ A3 - 3\cdot 18\cdot Mol\ A1 + Einwage\ B}$$

Zur Kontrolle des NCO-Umsatzes wurden Proben der Reaktionslösung mittels FT-IR-Spektrometer (Perkin Eimer, Paragon® 1000, GB) vermessen und anhand der NCO-Bande bei 2270 $cm^{-1}$ das Vorliegen freier NCO-Gruppen detektiert.
Die dynamischen Viskositäten wurden bei 23°C mit einem Rotationsviskosimeter (ViscoTester® 550, Thermo Haake GmbH, D-76227 Karlsruhe) bei einem Schergefälle von 40 $s^{-1}$ bestimmt.
Die Pendelhärte nach König wurde nach DIN 53157 bestimmt.
Festkörpergehalt wurde nach DIN EN ISO 3251 bestimmt (1 g Probe, Trocknungszeit im Umluftofen 1 Stunde bei 125°C).
Als Maß für die Verarbeitungszeit wurde die Auslaufzeit nach DIN 53211 bestimmt.
Die Trocknungsgeschwindigkeit wurde nach DIN 53150 und DIN EN ISO 1517 bestimmt.

**Edukte:**

TEOP: Triethylorthopropionat
TEOA: Triethylorthoacetat
BEPD: 2-Butyl-2-ethyl-1,3-propandiol
pTSA: para-Toluolsulfonsäure
MPA: Methoxypropylacetat
DBTL: Dibutylzinndilaurat
HDI: Hexamethylendiisocyanat
IPDI: Isophorondiisocyanat
Byk® 333, 355, 331 und 141: Verlaufshilfsmittel der Firma Byk Chemie, Wesel, DE

**Eingesetzte Polyisocyanate**

Polyisocyanat A:

Desmodur® VPLS 2102: HDI Allophanat mit einem NCO-Gehalt von 20,0 % und einer Viskosität bei 23°C von 300 mPa.s, Bayer MaterialScience AG, Leverkusen, DE.

Polyisocyanat B:

Desmodur® N3300: HDI Uretdion mit einem NCO-Gehalt von 21,8 % und einer Viskosität bei 23°C von 170 mPa.s, Bayer MaterialScience AG, Leverkusen, DE.

Polyisocyanat C:

Desmodur® N3600: HDI Trimerisat mit einem NCO-Gehalt von 23,0 % und einer Viskosität bei 23°C von 1200 mPa.s, Bayer MaterialScience AG, Leverkusen, DE.

Polyisocyanat D:

Desmodur® N3200: HDI Biuret mit einem NCO-Gehalt von 23,0 % und einer Viskosität bei 23°C von 2 500 mPa.s, Bayer MaterialScience AG, Leverkusen, DE.

Polyisocyanat E:

Desmodur® VPLS 2138: IPDI-n-Butanol Trimer/Allophanat, 80 % in Butylacetat mit einem NCO-Gehalt von 11,5 % und einer Viskosität von 1 500 mPa.s, Bayer MaterialScience AG, Leverkusen, DE.

Polyisocyanat F:

Desmodur® N3390, HDI Trimerisat, 90 % in Butylacetat mit einem NCO-Gehalt von 19,6 % und einer Viskosität bei 23°C von 650 mPas, Bayer MaterialScience AG, Leverkusen, DE.

Herstellung Polyorthoester-Polyisocyanat Addukte

Teil 1 der Reaktanden zur Adduktherstellung wurden gemäß unterstehender Tabellen 1 und 2 zusammen in einen Reaktor, der mit Rührer, Heizung, automatischer Temperatursteuerung, Stickstoffeinleitung, Destillierkolone ausgerüstet war, eingewogen und unter Rühren und Durchleiten von Stickstoff auf 85°C aufgeheizt. Die Temperatur wurde langsam erhöht bis 120°C, wobei Ethanol abdestilliert wurde. Nach 4 bis 6 Stunden war die Ethanol-Destillation beendet und ein Vakuum von 500 mbar bei 120°C wurde angelegt, um den Rest Ethanol abzudestillieren. Anschließend wurde Butylacetat (Teil 2) zugegeben. Dann wurde bei 120°C das Diisocyanat (Teil 3) zugetropft und die Reaktion bei 120°C weitergefahren bis die NCO-Bande im IR verschwunden war. Zum Schluss wurde das Polyisocyanat (Teil 4) bei 120°C tropfend zugegeben und solange weitergerührt bis der theoretische NCO-Gehalt erreicht wurde.

Tabelle 1:

| Polyorthoester-Polyisocyanat Addukte (NCO-haltig) | | | | |
|---|---|---|---|---|
| **Addukt** | **1** | **2** | **3** | **4** |
| Teil 1: | | | | |
| TEOP<br>TEOA<br>Pentaerythrit<br>BEPD<br>pTSA | 176 g<br>-<br>136 g<br>-<br>0,3 g | -<br>162 g<br>136 g<br>-<br>- | -<br>162g<br>136g<br>-<br>- | -<br>162g<br>68g<br>160g<br>- |
| Ethanol | - 138 g | - 138 g | -138g | -138g |
| Teil 2 | | | | |
| Butylacetat | 169 g | 198 g | 185 g | 200 g |
| Teil 3 | | | | |
| HDI<br>IPDI | 42 g<br>- | -<br>- | -<br>- | -<br>- |
| Teil 4 | | | | |
| Polyisocyanat A<br>Polyisocyanat B<br>Polyisocyanat C | -<br>457,5 g<br>- | 630 g<br>-<br>- | -<br>579 g<br>- | -<br>-<br>549 g |
| Festkörper<br>NCO-Gehalt<br>Latenter OH-Gehalt<br>Viskosität @ 23°C | 80 %<br>9,4 %<br>4,0 %<br>977 mPas | 80 %<br>8,0 %<br>3,4 %<br>380 mPas | 80 %<br>8,9%<br>3,7 %<br>370 mPas | 80 %<br>8,0 %<br>3,3 %<br>1685 mPas |

Tabelle 2:

| Polyorthoester-Polyisocyanat Addukte (NCO-frei) | | | | | | | |
|---|---|---|---|---|---|---|---|
| **Addukt** | **5** | **6** | **7** | **8** | **9** | **10** | **11** |
| Teil 1 | | | | | | | |
| TEOA<br>Pentaerythrit<br>BEPD<br>TMPD<br>NPG<br>TMP<br>pTSA | 162 g<br>136 g<br>-<br>-<br>-<br>-<br>0,1 g | 162 g<br>68 g<br>160 g<br>-<br>-<br>-<br>- | 162 g<br>102 g<br>80 g<br>-<br>-<br>-<br>- | 162 g<br>102 g<br>80 g<br>-<br>-<br>-<br>- | 162 g<br>102 g<br>-<br>73 g<br>-<br>-<br>- | 162 g<br>102 g<br>-<br>-<br>52 g<br>-<br>- | 162 g<br>102 g<br>-<br>-<br>-<br>44,7 g |
| Ethanol | -138g g | - 138 g | -138g g | -138g g | - 138 g | -138g | -138g g |
| Teil 2 | | | | | | | |
| Butylacetat | 200 g | 234 g | 190 g | 209 g | 206 g | 194 g | 171 g |
| Teil 3 | | | | | | | |
| HDI<br>IPDI | -<br>- | -<br>- | -<br>55,5 g | -<br>- | -<br>- | -<br>- | -<br>55,5 g |
| Teil 4 | | | | | | | |
| Polyisocyanat A | 210 g | - | - | - | - | - | - |

Tabelle 2: (fortgesetzt)

| Polyorthoester-Polyisocyanat Addukte (NCO-frei) | | | | | | | |
|---|---|---|---|---|---|---|---|
| **Addukt** | **5** | **6** | **7** | **8** | **9** | **10** | **11** |
| Teil 4 | | | | | | | |
| Polyisocyanat B -<br>Polyisocyanat C - | | -<br>183 g | -<br>91,5 g | -<br>183 g | -<br>183 g | -<br>183 g | -<br>91,5 g |
| Festkörper<br>NCO-Gehalt<br>Latenter OH-Gehalt<br>Viskosität @ 23°C | 65 %<br>0 %<br>6,0%<br>780 mPas | 65 %<br>0 %<br>5,1 %<br>1290 mPas | 65 %<br>0 %<br>6,3%<br>498 mPas | 65 %<br>0 %<br>5,7%<br>1565 mPas | 65 %<br>0 %<br>5,8%<br>3787 mPas | 65 %<br>0 %<br>6,1%<br>935 mPas | 65 %<br>2 %<br>7,0%<br>1645 mPas |

<u>Herstellung Vergleichspolyorthoester 16 und 17</u>

Die Reaktanden zur Polyorthoestertherstellung wurden gemäß unterstehender Tabelle 3 zusammen in einen Reaktor, der mit Rührer, Heizung, automatischer Temperatursteuerung, Stickstoffeinleitung, Destillierkolone ausgerüstet war, eingewogen und unter Rühren und Durchleiten von Stickstoff auf 85°C aufgeheizt. Die Temperatur wurde langsam erhöht bis 150°C, wobei Ethanol abdestilliert wurde. Nach 4 bis 6 Stunden ist die Ethanol Destillation beendet und ein Vakuum von 500 mbar bei 150°C wurde angelegt, um den Rest Ethanol abzudestillieren.

Tabelle 3:

| Polyorthoester-Polyisocyanat Addukte | | | | | | |
|---|---|---|---|---|---|---|
| **Addukt** | **12** | **13** | **14** | **15** | **16** | **17** |
| Teil 1: | | | | | | |
| TEOA<br>TEOF<br>Pentaerythrit<br>TMP<br>Ethylenglykol<br>1,2 Hexandiol<br>CHDM<br>BEPD<br>Ameisensäure 90%ig in Wasser | 162 g<br>-<br>-<br>178,7 g<br>-<br>-<br>-<br>-<br>- | 162 g<br>-<br>102 g<br>-<br>31 g<br>-<br>-<br>-<br>- | 162 g<br>-<br>102 g<br>-<br>-<br>59 g<br>-<br>-<br>- | 162 g<br>-<br>68 g<br>-<br>-<br>-<br>72 g<br>-<br>- | 162 g<br>-<br>33,5 g<br>-<br>-<br>-<br>-<br>160 g<br>1 g | -<br>148 g<br>-<br>-<br>-<br>-<br>-<br>160 g<br>1 g |
| Ethanol | -138g | -138g | -138g | - 138 g | -138g | - 138 g |
| Teil 2 | | | | | | |
| Butylacetat | 208 g | 183 g | 198 g | 187 g | 0 g | 0 g |
| Teil 3 | | | | | | |
| HDI<br>IPDI | -<br>- | -<br>- | -<br>- | -<br>- | -<br>- | -<br>- |
| Teil 4 | | | | | | |
| Polyisocyanat C | 183 g | 183 g | 183 g | 183 g | - | - |
| Festkörper<br>NCO-Gehalt<br>Latenter OH-Gehalt | 65 %<br>0 %<br>5,7 % | 65 %<br>0 %<br>6,5 % | 65 %<br>0 %<br>6,0 % | 65 %<br>0 %<br>6,4 % | 100 %<br>-<br>15,8 % | 100 %<br>-<br>17,0 % |

Tabelle 3: (fortgesetzt)

| Polyorthoester-Polyisocyanat Addukte | | | | | | |
|---|---|---|---|---|---|---|
| **Addukt** | **12** | **13** | **14** | **15** | **16** | **17** |
| Teil 4 | | | | | | |
| Viskosität 23°C (mPa. s) | geliert | geliert | geliert | geliert | 642 mPas | 458 mPas |

Bei Addukt 12 wurde statt eines Polyols A2) einer OH-Funktionalität von 4 - 8 Trimethylolpropan mit einer OH-Funktionalität von 3 eingesetzt, wobei allerdings ein Vergelen des Reaktionsansatzes beobachtet wurde.

Bei den Addukten 13 bis 15 wurden in Komponente A3) verschiedene, nicht erfindungsgemäße Diole eingesetzt. Die Reaktionsansätze sind vergelt.

Die Verhaltensweisen der Addukte 12-15 zeigen sehr deutlich, dass nur bei Verwendung der erfindungsgemäßen Polyolkombination durch die Komponenten A2) und A3) lagerstabile Systeme erhalten werden können. Bei weitem nicht alle, beispielsweise in EP-A 1 225 172 genannten Polyole und Kombinationen, eignen sich damit zum Aufbau der erfindungsgemäßen Polymere.

Acrylalpolyol (Vergleich):

Polyacrylatpolyol gelöst in Butylacetat mit einem Festkörper von 70 Gew.-%, einem Hydroxylgehalt von 2,8 Gew.-% und einer Viskosität bei 23°C von 1 200 mPa.s (VPLS 2350, Versuchsprodukt der Bayer MaterialScience AG, Leverkusen, DE).

Lackherstellung

Die Addukte aus den vorstehenden Tabellen 1,2 und 3 wurden gemäß den Tabellen 4 und 5 mit handelsüblichen Lackadditiven, Katalysatoren und gegebenenfalls Polyisocyanaten unter Rühren versetzt, anschließend mit einem 150 µm Rakel auf Glas appliziert und 10 min bei 60°C ausgehärtet.

Die Benzinbeständigkeit der so hergestellten Lackfilme wurde derart bestimmt, dass ein mit handelsüblichem Superbenzin getränkter Wattebausch für 1 bzw. 5 min. auf den applizierten Lackfilm gelegt wurde. Nach dieser Zeit wurde der Lackfilm mit einem Tuch trockengewischt und in einer Abstufung von 0 - 5 optisch beurteilt (keine Veränderung, 5: starke Anquellung). Zusätzlich wurde nach einem Tag Lagerung der Proben bei Rautemperatur dieser Test wiederholt (Messwerte in Klammern).

Tabelle 4:

| Beschichtung & anwendungstechnische Daten | | | | | | |
|---|---|---|---|---|---|---|
| **Beispiel** | **1** | **2** | **3** | **4** | **5** | **6** |
| Addukt 1 | 72,12 g | | - | - | - | - |
| Addukt 2 | - | 100 g | - | - | - | - |
| Addukt 3 | - | - | 100 g | - | - | - |
| Addukt 4 | - | - | - | 58,14 g | - | - |
| Addukt 5 | - | - | - | - | 100 g | - |
| Addukt 6 | - | - | - | - | - | 100 g |
| Byk® 331 | 0,12 g | 0,16 g | 0,16 g | 0,10 g | 0,26 g | 0,11 g |
| Byk® 141 | 0,72 g | 1,00 g | 1,00 g | 0,62 g | 1,62 g | 0,66 g |
| DBTL | 0,58 g | 1,60 g | 1,60 g | 0,99 g | 2,59 g | 1,06 g |
| MPA/Xylol/BA 1:1:1 | 20,52 g | 35,00 g | 32,00 g | 34,38 g | 81,63 g | 28,61 g |
| Polyisocyanat D | - | - | - | 2,87 g | 64,45 g | 26,45 g |
| Dodecylbenzolsulfonsäure | 3,61 g | 5,00 g | 5,00 g | 2,91 g | 5,00 g | 2,05 g |
| Festkörper | 60 % | 57 % | 58% | 50% | 51 % | 53,5% |
| Auslaufzeit DIN4 (sec) nach | | | | | | |
| 0,0 h | 20 | 21 | 21 | 18 | 22 | 22 |
| 1,0 | 20 | 19 | 20 | 18 | 25 | 23 |

Tabelle 4: (fortgesetzt)

| Beschichtung & anwendungstechnische Daten | | | | | | |
|---|---|---|---|---|---|---|
| Auslaufzeit DIN4 (sec) nach | | | | | | |
| 2,0 | 20 | 19 | 19 | 18 | 29 | 24 |
| 3,0 | 20 | 20 | 19 | 19 | 31 | 27 |
| 4,0 | 20 | 20 | 20 | 21 | 35 | 32 |
| Trocknungszeit 10 min 60°C | 0/0 | 0/0 | 0/0 | 0/0 | 0/0 | 0/0 |
| T1+min | 0 | 0 | 0 | 0 | 0 | 0 |
| T3+h | 0 | 0 | 0 | 0 | 0 | 0 |
| T4+h | 0 | 0 | 0 | 0 | 0 | 0 |
| Pendelhärte | 62 s | 52s s | 50 s | 28 s | 112 s | 55s s |
| Benzinbeständigkeit 1 min / 5 min | 0/0 | 0/0(2/3) | 0/0(2/3) | 1/1(2/3) | 0/0(2/4) | 1/1(3/4) |
| 0 = keine Veränderung, 5 = starke Anquellung | | | | | | |

Tabelle 4:

| Beschichtung & anwendungstechnische Daten | | | | | |
|---|---|---|---|---|---|
| **Beispiel** | **7** | **8** | **9*** | **10*** | **11*** |
| Addukt 8 | 100 g | 100 g | - | - | - |
| Addukt 16 | - | - | 27,64 g | - | - |
| Addukt 17 | - | - | - | 25,26 g | - |
| Acrylatpolyol | - | - | - | - | 56,28 g |
| Byk® 333 | - | - | - | | 0,72 g |
| Byk® 355 | - | - | - | | 0,51 g |
| Byk® 331 | 0,27 g | 0,35 g | 0,15 g | 0,14 g | - |
| Byk® 141 | 0,33 g | 0,43 g | 0,93 g | 0,89 g | 0,51 g |
| DBTL | 2,64 g | 3,47 g | 1,49 g | 1,43 g | 0,16 g |
| MPA/Xylol/BA 1:1:1 | 55,68 g | 41,99 g | 21,5 g | 24,89 g | 30,26 g |
| Polyisocyanat D | 67,66 g | - | 46,91 g | 46,12 g | - |
| Polyisocyanat E | - | 135,3 g | - | - | - |
| Polyisocyanat F | - | - | -- | - | 20,62 g |
| Dodecylbenzolsulfonsäure | 5,00 g | 5,00 g | 1,38 g | 1,26 g | - |
| Festkörper | 57,7 % | 60,8 % | 75 % | 72 % | 58 % |
| Auslaufzeit DIN2 (sec) nach | | | | | |
| 0,0 h | 20 28 | 20 20 | 22 34 | 20 30 | 20 21 |
| 1,0 | 34 | 25 | 43 | 48 | 23 |
| 2,0 | | | | | |
| 3,0 | 34 35 | 26 28 | 45 46 | 55 68 | 32 37 |
| 4,0 | | | | | |
| 6,0 | 36 | 31 | | | |
| Trocknungszeit 10 min | | | | | |
| 60°C | 1/0 | 0/0 | 5/3 | 5/3 | 4/1 |
| T1 +min | 0 | 0 | 4,5 | 7 | 0 |
| | 0,5 | 0 | > 7 | > 7 | 6 |
| T3+h T3+h T4+h | 2 | 0 | >7 | >7 | >6 |
| Pendelhärte | 68 s | 139 s | 69 s | 133 s | 109 s |
| Benzinbeständigkeit Nach 1 min / 5 min | 0/1 (2/3) | 2/3 (5/5) | 3/3 (4/4) | 2/3 (5/5) | 4/4 (5/5) |
| 0=keine Veränderung, 5=starke Veränderung | | | | | |

Wie aus den Auslaufzeiten als Maß für die Verarbeitbarkeit und die Trocknungszeiten nach Applikation sehr deutlich wird, zeichnen sich die erfindungsgemäß auf Polyorthestern basierenden Lacksysteme (Beispiel 1 - 8) durch hohe Applikationssicherheit und schnelles Trocknungsverhalten verglichen mit den Vergleichssystemen 9 - 11 aus. Ferner weisen die erfindungsgemäßen Lacke deutlich bessere Benzinbeständigkeit auf als die Vergleichslacke der Beispiele 9 - 11.

**Patentansprüche**

**1.** Verfahren zur Herstellung von polyorthoester- und gegebenenfalls NCO-gruppenhaltigen Polymeren, bei dem

A) ein Polyorthoester, welcher mindestens eine isocyanatreaktive Gruppe aufweist, durch Umsetzung von

A1) einem oder mehreren acyclischen Orthoestern mit

A2) niedermolekularen Polyolen mit einer Funktionalität von 4 - 8 und einem zahlenmittleren Molekulargewicht von 80 - 500 g/mol und

A3) gegebenenfalls einem 1,3 Diol und/oder einem Triol, wobei die Hydroxylgruppen durch mindestens 3 Kohlenstoffatome voneinander getrennt sind,
gegebenenfalls in Anwesenheit von

A4) Katalysatoren

hergestellt wird und

B) dieser Polyorthoester anschließend mit mindestens einem Polyisocyanat_umgesetzt wird.

**2.** Verfahren zur Herstellung von polyorthoester- und gegebenenfalls NCO-gruppenhaltigen Polymeren, **dadurch gekennzeichnet, dass** in Schritt A) als

A1) Orthoessigsäuretriethylester und/oder Orthopropionsäuretriethylester,

A2) Pentaerythrit und

A3) Neopentylglykol, 2-Methyl-1,3-propandiol, 2-Methyl-2,4-pentandiol, 3-methyl-1,3-butandiol, 2-ethyl-1,3-hexandiol, 2,2-diethyl-1,3-propandiol, 2,2,4-Trimethyl-1,3-pentandiol, 2-Butyl-2-ethyl-1,3-propandiol, Trimethylolpropan oder deren Gemische untereinander

eingesetzt werden.

**3.** Verfahren zur Herstellung von polyorthoester- und gegebenenfalls NCO-gruppenhaltigen Polymeren nach Anspruch 1 oder 2, **dadurch gekennzeichnet, dass** als Katalysator in Schritt A) p-Toluolsulfonsäure verwendet wird.

**4.** Verfahren zur Herstellung von polyorthoester- und gegebenenfalls NCO-gruppenhaltigen Polymeren nach einem der Ansprüche 1 bis 3, **dadurch gekennzeichnet, dass** das Äquivalentverhältnis von umzuesternden Gruppen der Verbindungen der Komponente A1) zu den OH-Gruppen der Verbindungen der Komponenten A2) und A3) 1 : 1,3 bis 1 : 1,5 beträgt.

**5.** Verfahren zur Herstellung von polyorthoester- und gegebenenfalls NCO-gruppenhaltigen Polymeren nach einem der Ansprüche 1 bis 4, **dadurch gekennzeichnet, dass** das Äquivalentverhältnis von NCO-reaktiven Gruppen des Polyorthoesters aus Schritt A) und NCO-Gruppen des Polyisocyanats in Schritt B) 1 : 1 - 1 : 3,2 beträgt.

**6.** Verfahren zur Herstellung von polyorthoester- und gegebenenfalls NCO-gruppenhaltigen Polymeren nach einem der Ansprüche 1 bis 5, **dadurch gekennzeichnet, dass** die so erhältlichen polyorthoester- und gegebenenfalls NCO-gruppenhaltigen Polymere ein zahlenmittleres Molekulargewicht $M_n$ von 500 bis 3 000 g/mol aufweisen.

**7.** Polyorthoester- und gegebenenfalls NCO-gruppenhaltigen Polymere erhältlich nach einem Verfahren gemäß einem der Ansprüche 1 bis 6.

8. Verwendung der Polyorthoester- und gegebenenfalls NCO-gruppenhaltigen Polymere nach Anspruch 7 bei der Herstellung von Beschichtungen, Verklebungen und/oder Dichtungen.

9. Beschichtungsmittel enthaltend

   a) einen oder mehrere polyorthoester- und gegebenenfalls NCO-gruppenhaltige Polymere gemäß Anspruch 7,

   b) gegebenenfalls Polyisocyanate

   c) Katalysatoren

   d) gegebenenfalls Hilf- und Zusatzstoffe.

10. Beschichtungen erhältlich aus polyorthoester- und gegebenenfalls NCO-gruppenhaltigen Polymeren gemäß Anspruch 7.

11. Substrate beschichtet mit Beschichtungen nach Anspruch 10.